# NEUE EUROPÄISCHE PATENTSCHRIFT

(11) **EP 0 687 822 B2**
(45) Veröffentlichungstag und Bekanntmachung des Hinweises auf die Entscheidung über den Einspruch: **08.09.2004**
(45) Hinweis auf die Patenterteilung: 12.08.1998
(21) Anmeldenummer: 95810222.0
(22) Anmeldetag: 05.04.1995
(51) Int. Cl.: F16B 37/04, E04D 3/08, F16L 3/26

(54) **Befestigungsvorrichtung**
Fastening device
Dispositif de fixation

(30) Priorität: 17.06.1994 DE 4421252
(43) Veröffentlichungstag der Anmeldung: 20.12.1995
(73) Patentinhaber: HILTI Aktiengesellschaft, 9494 Schaan (LI)
(72) Erfinder: Plank, Wolfgang, A-6806 Tosters (AT); Waibl, Kurt, A-6840 Götzis (AT)
(74) Vertreter: Wildi, Roland

(56) Entgegenhaltungen:
- EP-A- 0 604 361
- CH-A- 597 450
- DE-A- 4 243 185
- DE-C- 4 128 157
- FR-A- 2 636 687
- US-A- 3 483 910
- US-A- 4 146 074
- US-A- 4 410 298
- US-A- 4 666 355
- US-A- 5 209 619
- PATENT ABSTRACTS OF JAPAN vol. 017, no. 198 (M-1398), 19.April 1993 & JP-A-04 343958 (FUJISASH CO), 30.November 1992,

## Beschreibung

Die Erfindung betrifft eine Befestigungsvorrichtung gemäss dem Oberbegriff des Patentanspruchs 1.

Aus der CH-PS 597 450 ist ein Montagesystem bekannt, das ein Gegenstück in Form einer Befestigungsschiene aufweist, die aus einem Hohlprofil mit rechtekkigem Querschnitt besteht und eine in Längsrichtung verlaufende, schlitzartige Oeffnung zum Einsetzen einer oder mehrerer Befestigungsvorrichtungen besitzt. Die schlitzartige Oeffnung wird in der Breite von freien Enden zweier Schenkel begrenzt.

Die Befestigungsvorrichtung setzt sich aus einem Grundkörper mit einem unrunden Kopf, einem Zwischenkörper und einem Befestigungselement zusammen, wobei das Befestigungselement in der Lage ist, den Grundkörper und den Zwischenkörper gegeneinander zu verspannen. Für die Festlegung einer derartigen Befestigungsvorrichtung an der Befestigungsschiene, die sich beispielsweise an einer Decke befindet und mit der schlitzartigen Oeffnung nach unten zeigt, wird der Grundkörper der Befestigungsvorrichtung in die schlitzartige Oeffnung gesteckt und um 90° verdreht, so dass der unrunde Kopf im Innern der Befestigungsschiene an der Innenseite der beiden Schenkel zur Anlage gelangt.

Bei der bekannten Lösung kann sich die Befestigungsvorrichtung jedoch durch Erschütterungen selbständig verdrehen, so dass die Befestigungsvorrichtung wiederum aus der Oeffnung der Befestigungsschiene fallen kann. Ist die Befestigungsschiene in grosser Höhe montiert, so kann eine herabfallende Befestigungsvorrichtung eine sich darunter befindliche Person schwer verletzen.

In der den gattungsgemässen Stand der Technik bildenden DE-C-41 28 157 ist eine Befestigungsvorrichtung beschrieben, die zum Einsatz in Verbindung mit C-Profilschienen ausgebildet ist, die eine in Längsrichtung verlaufende, von den freien Enden zweier Schenkel berandete Einstecköffnung aufweisen. Diese bekannte Befestigungsvorrichtung besitzt einen Grundkörper mit einem unrunden Kopf zum Einführen in die Einstecköffnung der C-Profilschiene. Vom Grundkörper ragt ein zylindrischer Führungsnippel ab, der eine Gewindebohrung aufweist. Der Führungsnippel ist an seinem unteren Ende zug- und drehfest mit dem Grundkörper verbunden. Oberhalb des Grundkörpers ist ein plattenförmigen Zwischenkörper angeordnet, der eine Durchgangsbohrung besitzt, in der der Führungsnippel drehbar ist. Das von der Grundplatte abragende Ende des Führungsnippels ist mit einem bundförmigen Rand versehen. Der Führungsnippel ist von einer Druckfeder umgeben, die sich einerseits an der Oberseite des Zwischenkörpers und andererseits am bundförmigen Rand abstützt. Die Druckfeder presst den Zwischenkörper gegen den Grundkörper.

Zur Montage dieser Befestigungvorrichtung wird Grundkörper mit parallel zur Einstecköffnung verlaufenden Längsseiten in die Profilschiene eingesetzt. Durch Druck auf den Führungsnippel werden der Grundkörper und der Zwischenkörper voneinander wegbewegt. Darauf wird der Grundkörper durch Drehung des Führungsnippels um 90° verdreht. Nach dem Loslassen des Führungnippels wird der Grundkörper wieder gegen den Zwischenkörper gepresst und werden die freien Enden der Schenkel der C-Profilschiene zwischen dem Grundkörper und dem Zwischenkörper eingeklemmt. Bei der Montage auf einer Profilschiene muss einerseits die Befestigungsvorrichtung gehalten werden und andererseits der Führungsnippel gegen die Federkraft der Druckfeder niedergepresst werden. Dieser Vorgang ist relativ umständlich und kann meist nur mit zwei Händen durchgeführt werden. Ausserdem hat der Anwender bei einem auf der Schiene aufliegenden Bauteil keine Kontrolle darüber, ob der Führungsnippel mit dem daran befestigten Grundkörper genau im erforderlichen Umfang von 90° verdreht wird, um eine sichere Klemmung der freien Enden der Schenkel zu erzielen. Dies kann vor allem bei Überkopfmontage sogar zu einem Herabfallen der Befestigungsvorrichtung und des damit befestigten Bauteils führen.

Der Erfindung liegt die Aufgabe zugrunde, eine Befestigungsvorrichtung zu schaffen, die in die schlitzartige Oeffnung eines Gegenstückes derart einsetzbar ist, dass sie axial verschiebbar und gegen selbständiges Verdrehen gesichert ist.

Erfindungsgemäss wird dies durch eine Befestigungsvorrichtung erreicht, die die im Kennzeichnenden Abschnitt des Patentanspruchs 1 angeführten Merkmale aufweist. Das erfindungsgemässe Federelement ermöglicht die Sicherung der Befestigungsvorrichtung gegen selbständiges Verdrehen, nachdem die Befestigungsvorrichtung mit dem unrunden Kopf in die schlitzartige Oeffnung der C-Profilschiene gesteckt und um 90° verdreht wurde. Das Federelement drückt den unrunden Kopf des Grundkörpers gegen die im Bereich der Oeffnung angeordneten freien Enden der Schenkel der C-Profilschiene. Damit der Grundkörper auch mit Hilfe des Zwischenkörpers in Umfangsrichtung verdreht werden kann, ist der Grundkörper drehfest mit dem Zwischenkörper verbunden. Die drehfeste Verbindung erfolgt über das Federelement.

Zur Verspannung des Grundkörpers und des Zwischenkörpers ist das Federelement zwischen dem Grundkörper und dem Zwischenkörper angeordnet. Das Federelement steht dabei axial fest in Verbindung mit dem Grundkörper und dem Zwischenkörper. Ist das Federelement nicht vorgespannt, so sind der Grundkörper und der Zwischenkörper der Befestigungsvorrichtung nahe beieinander angeordnet. Das Federelement kann unter Vorspannung gesetzt werden, indem der Grundkörper vom Zwischenkörper wegbewegt wird.

Durch die Verwendung eines vorzugsweise rechtwinklig zur Gewindeachse einfederbaren Federelementes, das mit seiner radial entspannten Aussenkontur die Projektion der Oeffnung wenigstens bereichsweise überragt, ist es möglich, die Befestigungsvorrichtung in der Oeffnung der C-Profilschiene im Sinne einer provisorischen Halterung festzulegen, ohne dass eine Verdrehung des Grundkörpers erfolgen muss.

Zweckmässigerweise weist das Federelement mit ersten Drehsicherungsflächen des Grundkörpers und zweiten Drehsicherungsflächen des Zwischenkörpers zusammenwirkende erste Gegenflächen und zweite Gegenflächen auf. Die an dem Federelement angeordneten ersten Gegenflächen sind von Kanten und die ersten Drehsicherungsflächen von Vorsprüngen gebildet. Die Kanten sind Teil seitlicher Ausnehmungen im Bereich der Durchtrittsöffnung. Die Ausnehmungen sind an jener Stirnseite des Federelementes offen ausgebildet, von welcher die zweiten Gegenflächen abragen. Die mit den Kanten zusammenwirkenden ersten Drehsicherungsflächen des Grundkörpers ragen als Vorsprünge ausgebildet im wesentlichen radial von einem im wesentlichen hohlzylindrisch ausgebildeten Ansatz des Grundkörpers ab. Der Aussendurchmesser des Ansatzes entspricht im wesentlichen dem Durchmesser der zentralen Durchtrittsöffnung des Federelementes. Durch einfaches Ausrichten der Vorsprünge gegenüber den Kanten und durch Zusammendrücken des Federelementes mit dem Grundkörper wird eine schnappartige Verbindung dieser beiden Teile erreicht.

Die an dem Federelement angeordneten zweiten Gegenflächen sind zweckmässigerweise von Stiften und die zweiten Drehsicherungsflächen von Bohrungen gebildet. Die Durchmesser der Bohrungen sind geringfügig kleiner ausgebildet als die Durchmesser der Stifte. Die Stifte lassen sich so in die Bohrungen einpressen, so dass der Grundkörper über das Federelement mit dem Zwischenkörper axial fest und drehfest verbunden ist. Der besseren Verbindung dienen ineinandergreifende Profilierungen an der Innenwandung der Bohrungen und an der äusseren Oberfläche der Stifte.

Zur Festlegung der Befestigungsvorrichtung an einer bestimmten Stelle der Befestigungsschiene wird der Grundkörper und der Zwischenkörper mit Hilfe eines Befestigungselementes in Form einer Schraube oder Gewindestange unter Zwischenlage der Schenkel des C-Profilschiene zusammengezogen.

Derartige Befestigungsvorrichtungen eignen sich insbesondere für die Montage von Rohrleitungen, wobei die Rohrleitungen über entsprechende Rohrschellen über Befestigungselemente in Form von Gewindestangen mit der Befestigungsvorrichtung in Verbindung stehen. Zur Festlegung derartiger Gewindestangen an der Befestigungsvorrichtung sind diese lediglich durch die Durchgangsbohrung im zentralen Bereich des Zwischenkörpers hindurchzustecken und in das Gewinde des Grundkörpers einzudrehen. Durch das Festziehen einer auf der Gewindestange angeordneten Kontermutter können der Grundkörper und der Zwischenkörper zusammengezogen werden.

Um eine Sicherung gegen unerwünschtes Verdrehen eines Bauteiles gegenüber der Befestigungsvorrichtung zu erreichen, weist der Zwischenkörper vorteilhafterweise wenigstens einen als Drehsicherung für das Bauteil dienenden Vorsprung auf, der in die Zentralbohrung des Gegenstückes ragt.

Die Erfindung wird nachfolgend anhand von Zeichnungen, die zwei Ausführungsbeispiele darstellen, näher erläutert. Es zeigen:
- Fig. 1: eine Befestigungsvorrichtung, in Form einer Explosionszeichnung;
- Fig. 2: die Befestigungsvorrichtung gemäss Fig. 1, in Verbindung mit einem Gegenstück;
- Fig. 3: eine weitere Befestigungsvorrichtung, in Form einer Explosionszeichnung;
- Fig. 4: die Befestigungsvorrichtung gemäss Fig. 3, in Verbindung mit einem Gegenstück, in Form eines Bauteiles.

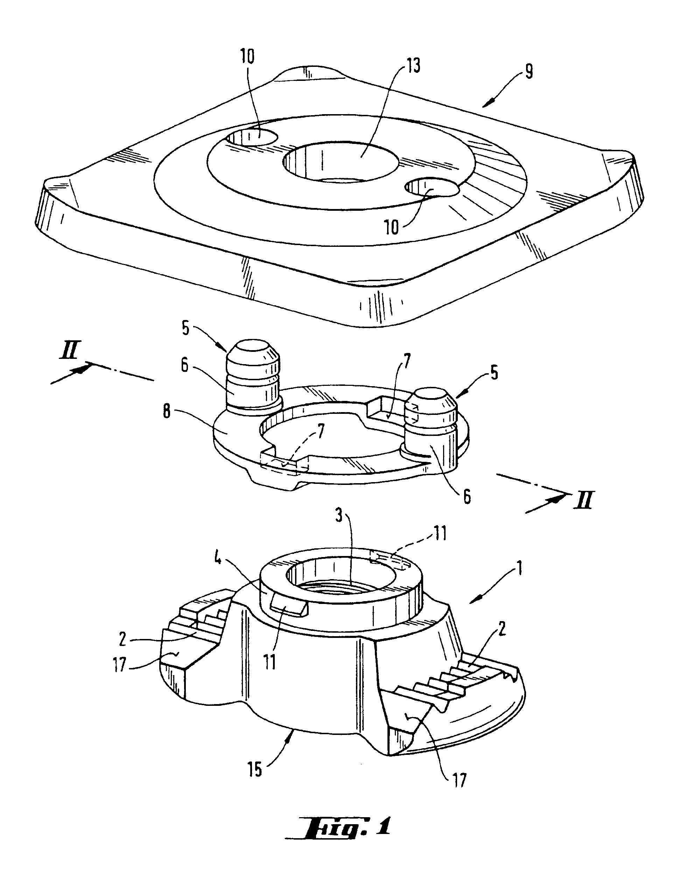

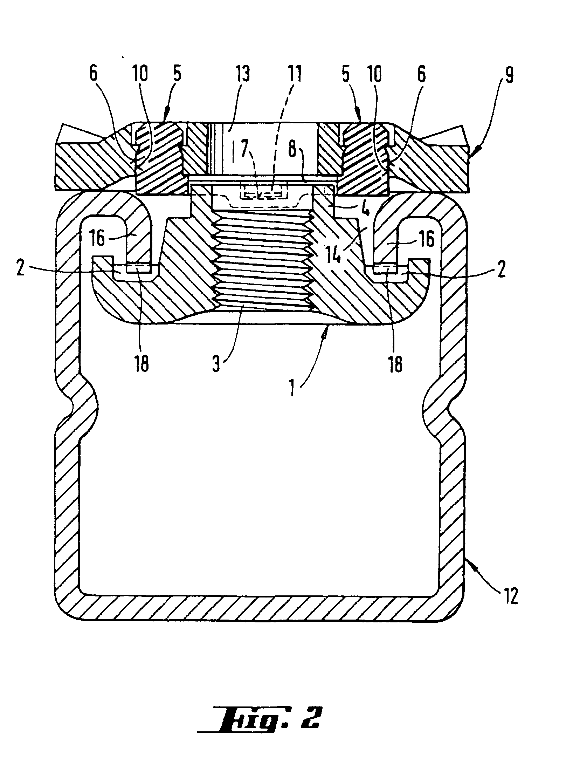

Die Fig. 1 und 2 zeigen eine Befestigungsvorrichtung, die sich aus einem Grundkörper 1, einem Zwischenkörper 9 und einem Federelement 5 zusammensetzt, wobei das Federelement 5 zwischen dem Grundkörper 1 und dem Zwischenkörper 9 angeordnet ist.

Der Grundkörper 1 der Befestigungsvorrichtung weist einen unrunden Kopf 15, ein Gewinde 3 in Form eines Innengewindes und zwei parallel zueinander verlaufende Zahnprofile 2 auf. Der Zwischenkörper 9 besitzt eine zentral angeordnete Durchgangsbohrung 13, deren Durchmesser grösser ist als der Aussendurchmesser des am Grundkörper 1 angeordneten Innengewindes. Weiters besitzt der Zwischenkörper 9 zwei einander diametral gegenüberliegende zweite Drehsicherungsflächen 10 in Form von Bohrungen.

Das Federelement 5 besitzt die Eigenschaft, in axialer Richtung federbar zu wirken. Am Federelement 5 sind zweite Gegenflächen 6 in Form von Stiften angeordnet, die sich auf einem Anschlagring 8 ebenfalls diametral gegenüberliegen und derart von diesem abragen, dass sie mit den Bohrungen des Zwischenkörpers 9 zusammenwirken können. Der Durchmesser dieser Stifte ist geringfügig grösser ausgebildet als der Durchmesser dieser Bohrungen.

Der axial elastischen Festlegung des Federelementes 5 an dem Grundkörper dienen erste Gegenflächen 7 in Form von Kanten an dem Federelement 5, die von seitlichen Ausnehmungen im Bereich der Durchtrittsöffnung gebildet sind. Die Gegenflächen 7 sind mit radial vom Grundkörper 1 abragenden ersten Drehsicherungsflächen 11 in Form von Vorsprüngen im Bereich eines hohlzylindrischen Ansatzes 4 durch Zusammenstecken schnappartig miteinander in Verbindung bringbar.

Die erfindungsgemässe Befestigungsvorrichtung dient beispielsweise der Festlegung von Rohrleitungen an einem Gegenstück 12 in Form einer im wesentlichen C-förmig ausgebildeten Befestigungsschiene, die eine in Längsrichtung verlaufende schlitzartige Oeffnung 14 aufweist. Die Breite der schlitzartigen Oeffnung 14 ist durch zwei Schenkel 16 begrenzt, die mit ihren freien Enden parallel zueinander in die Befestigungsschiene hinein abgebogen sind. Die freien Enden der Schenkel 16 sind mit einer zahnförmigen Profilierung 18 versehen. Ein komplementär dazu ausgebildetes Zahnprofil 2 ist an dem unrunden Kopf 15 des Grundkörpers 1 angeordnet.

Wird die Befestigungsvorrichtung, wie in Fig. 2 dargestellt, in die schlitzartige Oeffnung 14 der Befestigungsschiene hineingesteckt und um 90° verdreht, so gelangen die am Grundkörper 1 angeordneten Einführschrägen 17 mit den Schenkeln 16 in Berührung. Ueber die Einführschrägen 17 werden der Grundkörper 1 und der Zwischenkörper 9 axial auseinanderbewegt. Dadurch erfährt das Federelement 5 eine Vorspannung. Wird jene Position des Grundkörpers 1 erreicht, in der das Zahnprofil 2 des Grundkörpers 1 in die zahnförmige Profilierung 18 der Befestigungsschiene greift, so erfolgt eine axiale Versetzung des Grundkörpers 1 in die entgegengesetzte Richtung zu den Schenkeln 16 hin um wenigstens den Betrag der Zahnhöhe des Zahnprofils 2. In dieser Lage ist das Federelement 5 axial vorgespannt und entlang der Oeffnung 14 der Befestigungsschiene verschiebbar.

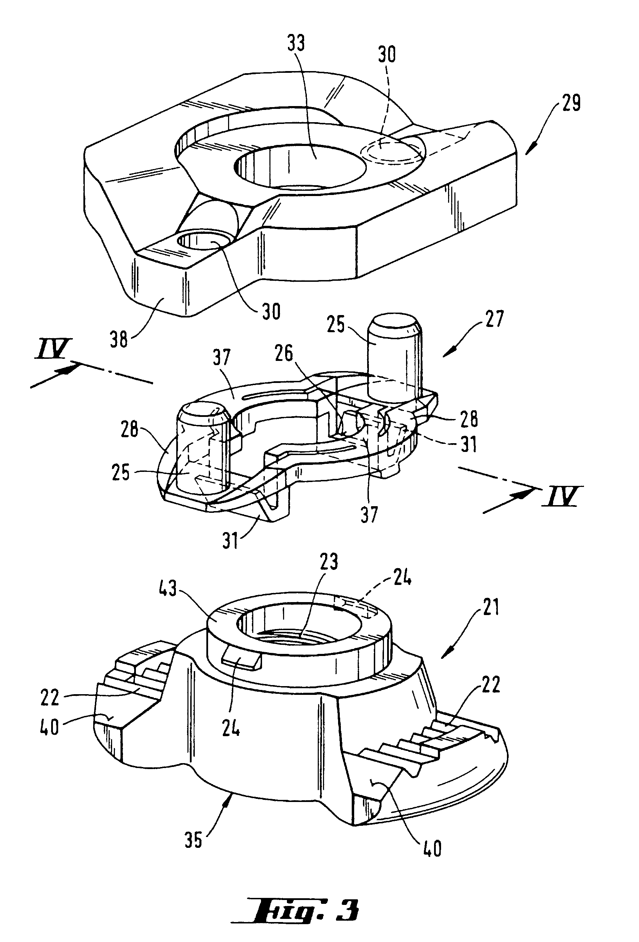

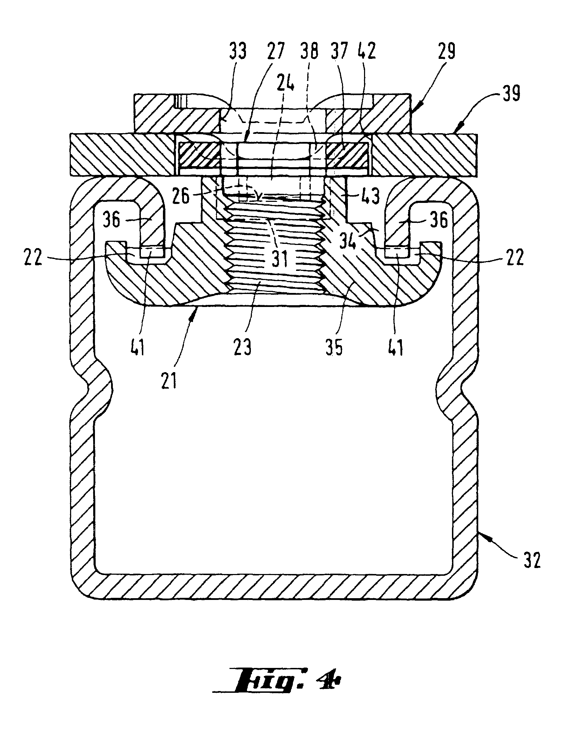

Die in Fig. 3 und 4 dargestellte Befestigungsvorrichtung besteht aus einem Grundkörper 21, einem Zwischenkörper 29 und einem Federelement 27, wobei das Federelement 27 ebenfalls zwischen dem Grundkörper 21 und dem Zwischenkörper 29 angeordnet ist.

Der Grundkörper 21 besitzt weiters ein Gewinde 23 und zwei einander diametral gegenüberliegend angeordnete erste Drehsicherungsflächen 24 in Form von Vorsprüngen an einem hohlzylindrischen Ansatz 43.

Der Zwischenkörper 29 ist mit einer im zentralen Bereich angeordneten Durchgangsbohrung 33 versehen, deren Durchmesser grösser ist als der Aussendurchmesser des am Grundkörper 21 angeordneten Gewindes 23 in Form eines Innengewindes. Am Zwischenkörper 29 sind ebenfalls zwei einander diametral gegenüberliegende zweite Drehsicherungsflächen 30 in Form von Bohrungen angeordnet. Vom Zwischenkörper 29 ragen zwei einander diametral gegenüberliegende, leistenförmig ausgebildete Vorsprünge 38 ab, die eine Sicherung gegen Verdrehen für das als Bauteil ausgebildete Gegenstück 39 bilden, welches mit Hilfe der Befestigungsvorrichtung an der Befestigungsschiene festlegbar ist.

Das Federelement 27 weist eine zentrale Durchgangsbohrung auf, deren Durchmesser grösser ist als der Gewindeaussendurchmesser des am Grundkörper 21 angeordneten Innengewindes 23. Insgesamt besitzt das Federelement 27 weiters zwei erste, einander diametral gegenüberliegende Gegenflächen 26 in Form von Kanten und zwei zweite, einander diametral gegenüberliegende Gegenflächen 25 in Form von Stiften, wobei die ersten Gegenflächen 26 gegenüber den zweiten Gegenflächen 25 um 90° versetzt angeordnet sind. Der Durchmesser dieser Stifte ist geringfügig grösser als der Durchmesser der Bohrungen am Zwischenkörper 29. Die mit dem Zwischenkörper 29 zusammenwirkenden Stifte befinden sich auf einem axial elastischen Bereich 28 des Federelementes 27. Zwischen den paarweise angeordneten Stiften besitzt das Federelement 27 radial einfederbare Bereiche 31, deren Aussenkontur bzw. Aussendurchmesser grösser als die Breite der schlitzartigen Oeffnung 34 der Befestigungsschiene 32. Die radial einfederbaren Bereiche 31 erstrecken sich im wesentlichen bereichsweise um das Federelement 27. Der radial einfederbare Bereich 31 ist über Verbindungsstege 37 mit dem axial elastischen Bereich 28 des Federelementes 21 verbunden. Der Zwischenkörper 29 und der Grundkörper 21 sind über das Federelement 27 drehfest miteinander verbunden.

Die in Fig. 4 dargestellte Befestigungsvorrichtung verbindet das als Bauteil ausgebildete Gegenstück 39 mit dem als Befestigungsschiene ausgebildeten Gegenstück 32. Damit dies möglich ist, muss auch das Bauteil eine Zentralbohrung 42 aufweisen, durch die der unrunde Kopf 35 des Grundkörpers 21 sowie ein Teil des Federelementes 27 durchsteckbar ist und die der Aufnahme der Drehsicherung in Form leistenartiger Vorsprünge 38 des Zwischenkörpers 29 dient.

Beim Festlegen einer Befestigungsvorrichtung an einer Befestigungsschiene wird zuerst die Befestigungsvorrichtung teilweise durch das Gegenstück 39 in Form eines Bauteiles hindurchgesteckt, so dass eine schnappartige Verbindung zwischen Bauteil und Befestigungsvorrichtung über das radial federbare Federelement 27 erfolgt. Das Bauteil kann anschliessend zusammen mit der Befestigungsvorrichtung der Befestigungsschiene zugeführt werden, deren schlitzartige Oeffnung 34 in der Breite durch zwei Schenkel 36 begrenzt wird, wobei die Schenkel 36 mit ihren freien Enden parallel zueinander in das Hohlprofil hinein abgebogen sind. Die freien Enden der Schenkel 36 sind mit einer zahnförmigen Profilierung 41 versehen, die mit einem komplementären Zahnprofil 22 zusammenwirken, welches neben Einführschrägen 40 am Grundkörper 21 zu beiden Seiten eines unrunden Kopfes 35 angeordnet ist. Der Grundkörper 21 wird gegenüber der schlitzartigen Öffnung 34 derart ausgerichtet, dass er in die schlitzartige Öffnung 34 einsteckbar ist.

Die am Zwischenkörper 29 angeordneten Vorsprünge 38 sind leistenartig ausgebildet und ragen in die Zentralbohrung 42 des Bauteiles. Für die Festlegung der Befestigungsvorrichtung an der Befestigungsschiene erfolgt eine Verdrehung des Grundkörpers 21 über den Zwischenkörper 29 um 90°, so dass am unrunden Kopf 35 angeordnete Einführschrägen 40 in Kontakt mit den Schenkeln 36 der Befestigungsschiene kommen.

Über die Einführschrägen 40 erfolgt eine axiale Versetzung des Grundkörpers 21 gegenüber dem Zwischenkörper 29, so dass der in axialer Richtung elastische Teil des Federelementes 27 vorgespannt wird. Durch das Verdrehen der gesamten Befestigungsvorrichtung entspannt sich der radial einfederbare Bereich 31 in Richtung grösster Erstreckung der Zentralbohrung 42 des Gegenstückes 39. Auf diese Weise ist das Federelement 27 im Bereich der Zentralbohrung 42 des Bauteiles und der Oeffnung 34 der Befestigungsschiene frei beweglich.

Beim Verspannen der Befestigungsvorrichtung zusammen mit dem Bauteil 39 an der Befestigungsschiene wird ein nicht dargestelltes Befestigungselement in Form einer Schraube durch die zentrale Durchtrittsöffnung 33 am Zwischenkörper 29 und im Federelement 27 dem Innengewinde 23 des Grundkörpers 21 zugeführt. Beim Festziehen der Schraube erfolgt ein axiales Zusammenziehen aller Teile, wobei insbesondere der axial elastische Bereich 28 des Federelementes 27 zusammengedrückt wird und die leistenförmigen Vorsprünge 38 des Zwischenkörpers 29 in die Zentralbohrung 42 des Gegenstückes 39 eingreifen. Dabei werden die Verbindungsstege 37, die sich zwischen dem axial elastischen Bereich 28 und dem radial einfederbaren Bereich 31 des Federelementes 27 befinden, in axialer Richtung verformt.

## Patentansprüche

1. Befestigungsvorrichtung zum Einsatz in Verbindung mit C-Profilschienen, die eine in Längsrichtung verlaufende, von den freien Enden zweier Schenkel (16, 36) berandete Einstecköffnung (14, 34) aufweisen,
umfassend einen Grundkörper (1, 21), mit einem im wesentlichen hohlzylindrischen Ansatz (4, 43)
der einen unrunden Kopf (15, 35) und eine Bohrung mit einem Innengewinde (3, 23) aufweist,
einen Zwischenkörper (9, 29)
mit wenigstens einer Durchgangsbohrung (13, 33) und
ein parallel zur Gewindeachse federbares Federelement (5, 27), mit einer Durchtrittsöffnung
wobei der in die C-Profilschiene (12, 32) eingesetzte Grundkörper (1, 21) um 90° verdrehbar ist und
durch die Federkraft des Federelements (5, 27) unter Klemmung der freien Enden der Schenkel (16, 36) der C-Profilschiene (12, 32) gegen den Zwischenkörper (9, 29) vorgespannt ist,
**dadurch gekennzeichnet, dass**
das Federelement (5, 27) zwischen dem Grundkörper (1, 21) und dem Zwischenkörper (9, 29) angeordnet ist
und den Grundkörper (1, 21) und den Zwischenkörper (9, 29) drehfest miteinander koppelt,
wobei zur drehfesten Verbindung des Gründkörpers (1, 21) mit dem Federelement (5, 27) das Federelement (5, 27) Gegenflächen (7, 26) aufweist die als seitliche Ausnehmungen im Bereich der Durchtrittsöffnung gebildet sind und die mit Drehsicherungsflächen (11, 24) in Form einer Schnappverbindung zusammenwirken, die als Vorsprünge von dem; im wesentlichen hohlzylindrischen Ansatz (4, 43) des Grundkörpers (1, 21) abragen,

2. Befestigungsvorrichtung nach Anspruch 1, **dadurch gekennzeichnet, dass** die Federkraft des Federelements (5, 27) derart bemessen ist, dass die provisorisch montierte Befestigungsvorrichtung von Hand in Längsrichtung der Profilschiene (12, 32) verschiebbar ist.

3. Befestigungsvorrichtung nach Anspruch 1 oder 2, **dadurch gekennzeichnet, dass** das Federelement (27) rechtwinklig zur Gewindeachse einfederbar ist und mit seiner radial entspannten Aussenkontur die Projektion der Oeffnung (34) wenigstens bereichsweise überragt.

4. Befestigungsvorrichtung nach einem der Ansprüche 1 bis 3, **dadurch gekennzeichnet, dass** das Federelement (5, 27) mit zweiten Drehsicherungsflächen (10, 30) des Zwischenkörpers (9, 29) zusammenwirkende und zweite Gegenflächen (6, 25) aufweist.

5. Befestigungsvorrichtung nach Anspruch 4, **dadurch gekennzeichnet, dass** die zweiten Gegenflächen (6, 25) von Stiften und die zweiten Drehsicherungsflächen (10, 30) von Bohrungen gebildet sind.

6. Befestigungsvorrichtung nach einem der vorangehenden Ansprüche, **dadurch gekennzeichnet, dass** der Zwischenkörper (29) wenigstens einen Vorsprung (38) aufweist, der in eine Zentralbohrung (42) eines Anschlussbauteils (39) ragt.

## Claims

1. Fixing device for use in conjunction with C-profile rails which feature a longitudinally extending push-fit opening (14, 34) bounded by the free ends of two arms (16, 36),
comprising a basic body (1,21) with a substantially hollow cylindrical shoulder (4, 43) which features a non-circular head (15, 35) and an internally threaded bore (3, 23),
an intermediate body (9, 29) with at least one through-hole (13, 33) and
a spring element (5, 27) adapted to be resilient parallel to the thread's axis, with a through-hole,
the basic body (1, 21), when inserted into the C-profile rail (12, 32), being adapted to be rotated through 90° and
being pretensioned by the spring force of the spring element (5, 27) whilst the free ends of the arms (16, 36) of the C-profile rail (12, 32) are squeezed against the intermediate body (9, 29),
**characterised in that** the spring element (5, 27) is arranged between the basic body (1,21) and the intermediate body (9, 29)
and couples the basic body (1, 21) and the intermediate body (9, 29) together in a manner locked against rotation,
and for connecting the basic body (1, 21) to the spring element (5, 27) in a manner locked against rotation, the spring element (5, 27) features mating surfaces (7, 26) which are formed as lateral recesses in the region of the through-hole and which cooperate with anti-rotation surfaces (11, 24) in the form of a snap-fit connection, which as projections jut out from the substantially hollow cylindrical shoulder (4, 43) of the basic body (1, 21).

2. Fixing device according to claim 1, **characterised in that** the spring force of the spring element (5, 27) is so dimensioned that once the fixing device has been provisionally assembled it can be displaced by hand in the longitudinal direction of the profiled rail (12, 32).

3. Fixing device according to claim 1 or 2, **characterised in that** the spring element (27) is adapted to deflect at a right angle to the thread's axis and with its radially unstressed external contour it is raised above the projection of the opening (34) at least in certain regions.

4. Fixing device according to any of claims 1 to 3, **characterised in that** the spring element (5, 27) features second mating surfaces (6, 25) which cooperate with second anti-rotation surfaces (10, 30) of the intermediate body (9, 29).

5. Fixing device according to claim 4, **characterised in that** the second mating surfaces (6, 25) are formed by pins and the second anti-rotation surfaces (10, 30) by bores.

6. Fixing device according to any of the preceding claims, **characterised in that** the intermediate body (29) features at least one projection (38) which protrudes into a central bore (42) of a connecting component (39).

## Revendications

1. Dispositif de fixation à mettre en oeuvre en association avec des rails profilés en C qui comportent une ouverture d'insertion (14, 34) qui s'étend dans la direction longitudinale et est bordée par les extrémités libres de deux ailes (16, 36), comprenant un corps de base (1, 21) avec un embout sensiblement cylindrique creux (4, 43), qui comporte une tête non ronde (15, 35) et un trou avec un filetage intérieur (3, 23), un corps intermédiaire (9, 29) pourvu d'au moins un trou débouchant (13, 33) un élément élastique (5, 27) à mouvement élastique parallèle à l'axe du filetage avec un trou débouchant, le corps de base (1, 21) logé dans le rail profilé en C (12, 32) pouvant être tourné de 90° et étant précontraint contre le corps intermédiaire (9, 29) par la force élastique de l'élément élastique (5, 27) tout en serrant les extrémités libres des ailes (16, 36) du rail profilé en C (12, 32), **caractérisé en ce que** l'élément élastique (5, 27) est disposé entre le corps de base (1, 21) et le corps intermédiaire (9, 29) et solidarise en rotation le corps de base (1, 21) et le corps intermédiaire (9, 29), l'élément élastique (5, 27) présentant, pour la solidarisation en rotation du corps de base (1, 21) avec l'élément élastique (5, 27), des contre-surfaces (7, 26) qui sont formées par des évidements latéraux dans la zone du trou débouchant et coopérant sous forme de liaison clipsée avec des surfaces de blocage en rotation (11, 24) qui dépassent sous forme de saillies de l'embout sensiblement cylindrique creux (4, 43) du corps de base (1,21).

2. Dispositif de fixation selon la revendication 1, **caractérisé en ce que** la force élastique de l'élément élastique (5, 27) est calculée pour que le dispositif de fixation monté provisoirement puisse être déplacé manuellement dans la direction longitudinale du rail profilé (12, 32).

3. Dispositif de fixation selon la revendication 1 ou 2, **caractérisé en ce que** l'élément élastique (27) possède une course élastique perpendiculaire à l'axe du filetage et dépasse, au moins par endroits, de la projection de l'ouverture (34) avec son contour extérieur libre de contrainte radiale.

4. Dispositif de fixation selon l'une des revendications 1 à 3, **caractérisé en ce que** l'élément élastique (5, 27) comporte des secondes contre-surfaces (6, 25) coopérant avec des secondes surfaces de blocage en rotation (10, 30) du corps intermédiaire (9, 29).

5. Dispositif de fixation selon la revendication 4, **caractérisé en ce que** les secondes contre-surfaces (6, 25) sont formées par des tétons et les secondes surfaces de blocage en rotation (10, 30) par des trous.

6. Dispositif de fixation selon une des revendications précédentes, **caractérisé en ce que** le corps intermédiaire (29) comporte au moins une saillie (38) qui pénètre dans un trou central (42) d'un élément structurel de liaison (39).
